# EUROPEAN PATENT APPLICATION

(11) **EP 4 825 693 A1**
(43) Date of publication of application: **21.10.2026**
(21) Application number: 25741444.1
(22) Date of filing: 13.01.2025
(51) Int. Cl.: B60W 50/02, B60L 3/00

(54) **RESETTING RESTORATION METHOD AND RELATED APPARATUS**

(30) Priority: 18.01.2024 CN 202410074191
(71) Applicant: Yinwang Intelligent Technologies Co., Ltd., Shenzhen, Guangdong 518110 (CN)
(72) Inventor: HE, Lang, Shenzhen, Guangdong 518129 (CN); GE, Xinming, Shenzhen, Guangdong 518129 (CN); WU, Huanyu, Shenzhen, Guangdong 518129 (CN); XIE, Yu, Shenzhen, Guangdong 518129 (CN)
(74) Representative: MERH-IP Matias Erny Reichl Hoffmann Patentanwälte PartG mbB
(86) International application number: PCT/CN2025/071981
(87) International publication number: WO 2025/152882

(57) **Abstract**

Provided is a resetting restoration method, including: completing software initialization in response to a reset instruction; obtaining variable information, where the variable information includes state information of a target function before a reset occurs, and the target function includes a function started by the vehicle before the reset occurs; and when the variable information indicates that the reset is an abnormal reset, skipping startup condition determination logic of the target function, and setting, based on the variable information, a state of the target function to a target state, where the target state is a functional state of the target function before the reset occurs. Further provided are a micro-controller, a controller, and a computer-readable storage medium. According to the resetting restoration method, a usage state of a function can be quickly restored after a controller of a vehicle is reset, thereby reducing safety risks and improving user driving experience.

## Description

This application claims priority to Chinese Patent Application No. 202410074191.X, filed with the China National Intellectual Property Administration on January 18, 2024 and entitled "RESETTING RESTORATION METHOD AND RELATED APPARATUS", which is incorporated herein by reference in its entirety.

### TECHNICAL FIELD

This application relates to the field of vehicle technologies, and in particular, to a resetting restoration method and a related apparatus.

### BACKGROUND

With the development of vehicle technologies, computational power of controllers in vehicles is increasing, and software functions hosted by the controllers are becoming increasingly complex. Therefore, during the operation of a vehicle, reset of a controller inevitably occurs due to various reasons. After the controller is reset, conditions of many functions carried by the controller need to be re-evaluated. If startup conditions of the functions are not satisfied, the functions cannot be restored to usage states before the reset, resulting in poor user experience of the functions, and even causing safety risks to occupants under some operating conditions. Therefore, how to quickly restore usage states of functions after a controller is reset is an urgent technical problem to be solved.

### SUMMARY

This application provides a resetting restoration method and related apparatus, which enables rapid restoration of a function usage state after a reset of a vehicle controller, reduces potential safety risks, and improves user driving experience.

According to a first aspect, this application provides a resetting restoration method, where the method is applied to a micro-controller unit of a vehicle, and the method includes:
completing software initialization in response to a reset instruction;
obtaining variable information, where the variable information includes state information of a target function before the reset occurs, and the target function includes a function started by the vehicle before the reset occurs; and
when the variable information indicates that the reset is an abnormal reset, skipping startup condition determination logic of the target function, and setting, based on the variable information, a state of the target function to a target state, where the target state is a functional state of the target function before the reset occurs.

In the foregoing solution, an abnormal reset can be determined based on the variable information itself, and the function state before the reset can be restored based on the variable information. Compared with the related art, this solution does not need to re-determine startup conditions of a vehicle function state, and does not need to compare a current vehicle state with a state before the reset, thereby greatly reducing processing time and enabling rapid restoration of a function use state after a controller of the vehicle is reset.

In a possible implementation, the variable information includes:
obtaining the variable information within a first operating system scheduling period that follows completion of the software initialization.

In the foregoing solution, the variable information stored before the reset is obtained within the first scheduling period that follows completion of reset initialization. Because the variable information within the first scheduling period is not changed due to software execution, it remains the latest vehicle function state information stored before the reset. Therefore, an abnormal reset can be determined based on the variable information itself.

In a possible implementation, when the variable information indicates that the reset is an abnormal reset, the method further includes: disabling an outbound information transmission channel of the micro-controller unit; and
after setting, based on the variable information, the state of the target function to the target state, enabling the outbound information transmission channel of the micro-controller unit.

In the foregoing solution, during a reset process, the micro-controller unit is in a node-lost state in a vehicle system. To prevent abnormal operation of peripheral controllers after reset of the controller, the outbound communication channel of the controller is first disabled, and then re-enabled after restoration is completed.

In a possible implementation, the variable information includes powertrain ready state information of the vehicle; the variable information indicating that the reset is an abnormal reset includes:
when the readiness state information of the powertrain indicates that the powertrain is ready, the reset is an abnormal reset.

In the foregoing solution, an abnormal reset can be quickly determined based on the powertrain ready state information, thereby significantly reducing processing time for state restoration.

In a possible implementation, after setting the state of the target function to the target state based on the variable information, the method further includes:
obtaining latest torque information of the vehicle; and
performing torque filtering based on the latest torque information.

In the foregoing solution, after restoration, torque filtering is used to enable a rapid transition of a torque value before the reset to a latest target torque value, thereby reducing vehicle oscillation and improving user experience.

In a possible implementation, the variable information includes battery charging and discharging state information of the vehicle; the variable information indicating that the reset is an abnormal reset includes:
when the charge and discharge state information of the battery indicates that the battery is in a charging state or an external discharging state, the reset is an abnormal reset; where the external discharging state includes a state in which the battery supplies power to a device outside the vehicle.

In the foregoing solution, an abnormal reset can be quickly determined based on the battery charging and discharging state information, thereby significantly reducing processing time for state restoration.

In a possible implementation, setting the state of the target function to the target state based on the variable information includes:
setting, based on the variable information, the state of the target function to the target state within a first preset duration; where a value of the first preset duration is between three times and eight times a duration of the scheduling period.

In the foregoing solution, the restoration of the vehicle function state can be completed within three to eight scheduling periodicities, which is significantly shorter than the restoration duration in the conventional solution.

In a possible implementation, setting the state of the target function to the target state based on the variable information within the first preset duration includes:
generating first notification information and second notification information; where a generation time interval between the first notification information and the second notification information is the first preset duration, the first notification information indicates to restore the target function to the target state, and the second notification information indicates to restore function startup condition determination logic of the target function that is used before the reset; and
in response to the first notification information, starting to set, based on the variable information, the state of the target function to the target state, and completing restoration of the target state before the function startup condition determination logic is restored in response to the second notification information.

In the foregoing solution, through coordination between the first notification information and the second notification information, a target function module can complete a restoration operation within a preset duration and timely restore function startup condition determination logic, thereby ensuring vehicle safety.

In a possible implementation, setting the state of the target function to the target state based on the variable information within the first preset duration includes:
starting, at a first time point, to set the state of the target function to the target state based on the variable information, and complete restoration of the target state before a second time point; where a time interval between the first time point and the second time point is the first preset duration; and
starting, at the second time point, to restore function startup condition determination logic of the target function that is used before the reset.

In the foregoing solution, a timer may be set in the micro-controller unit, and the previous determination logic is restored when the timer expires, thereby ensuring vehicle safety.

In a possible implementation, obtaining the variable information includes: obtaining the variable information from a target storage area, where the target storage area belongs to a memory or an external memory of the micro-controller unit.

In the foregoing solution, the variable information is stored in a storage of the micro-controller unit, thereby facilitating rapid obtaining.

Optionally, completing software initialization in response to the reset instruction includes: completing initialization of a target memory of the micro-controller unit in response to the reset instruction; and when the target storage area belongs to the memory of the micro-controller unit, the target storage area belongs to a memory area outside the target memory.

In the foregoing solution, the target storage area is not affected by memory initialization upon reset, thereby preserving information before the reset.

In a possible implementation, the target storage area is used for periodically writing the state information of the target function; and before the obtaining the variable information in the target storage area, the method further includes: pausing a write function of the target storage area based on the reset instruction.

In the foregoing solution, the micro-controller unit, based on the reset instruction, notifies each application-layer functional software to pause writing variable information into the target storage area (stopping the writing into the target storage area), so as to ensure that the information in the target storage area corresponds to the last write operation before the reset. After obtaining the information in the target storage area, a notification is further sent to each application-layer software to continue storing variable information in the target storage area (enabling the writing into the target storage area). Therefore, it can be ensured that the variable information in the target storage area after the reset is not changed due to software execution, and still corresponds to the latest vehicle function state information stored before the reset. Therefore, an abnormal reset can be determined based on the variable information itself.

In a possible implementation, obtaining the variable information includes: receiving the variable information from a target apparatus; where the target apparatus is independent of the micro-controller unit and is configured to store the variable information.

In the foregoing solution, the target apparatus may be a server or another controller in a vehicle, and the micro-controller unit may interact with the target apparatus to store and obtain the variable information, where storage of the variable information is also not affected by a reset of the micro-controller unit.

Optionally, the variable information includes one or more of the following: a vehicle energy control request, a vehicle high-voltage mode request, a high-voltage enable flag, a high-voltage state of a battery management system, a vehicle high-voltage and low-voltage state, a charge and discharge state, a powertrain readiness state, a vehicle gear, a pedal learning value, a power anti-theft state, a vehicle mode, a driving mode, a single-pedal mode, a scenario mode, a steering mode, and an electronic stability control system mode. This solution can achieve rapid restoration of various functional states, and has a wide range of application scenarios.

In a possible implementation, the enabling of the outbound information transmission channel of the micro-controller unit includes: enabling the outbound information transmission channel of the micro-controller unit after a second preset duration elapses since disabling the outbound information transmission channel of the micro-controller unit.

In the foregoing solution, a timeout protection mechanism for disabling the outbound transmission channel is designed. Once the disabling duration reaches the second preset duration, the channel is enabled, thereby preventing adverse effects caused by excessively long communication interruption.

According to a second aspect, this application provides a micro-controller unit, where the micro-controller unit includes:
a processing unit, configured to complete software initialization in response to a reset instruction;
an obtaining unit, configured to obtain variable information, where the variable information includes state information of a target function before the reset occurs, and the target function includes a function started by the vehicle before the reset occurs;
where the processing unit is further configured to: when the variable information indicates that the reset is an abnormal reset, skip startup condition determination logic of the target function, and set, based on the variable information, a state of the target function to a target state, where the target state is a functional state of the target function before the reset occurs.

In a possible implementation, the obtaining unit is specifically configured to:
obtain the variable information within a first operating system scheduling period that follows completion of the software initialization.

In a possible implementation, the processing unit is further configured to:
when the variable information indicates that the reset is an abnormal reset, disable an outbound information transmission channel of the micro-controller unit; and
after setting, based on the variable information, the state of the target function to a target state, enable the outbound information transmission channel of the micro-controller unit.

In a possible implementation, the variable information includes powertrain ready state information of the vehicle; the variable information indicating that the reset is an abnormal reset includes:
when the readiness state information of the powertrain indicates that the powertrain is ready, the reset is an abnormal reset.

In a possible implementation, the processing unit is further configured to:
after setting, based on the variable information, the state of the target function to the target state, obtain latest torque information of the vehicle;
perform torque filtering based on the latest torque information.

In a possible implementation, the variable information includes battery charging and discharging state information of the vehicle; the variable information indicating that the reset is an abnormal reset includes:
when the charge and discharge state information of the battery indicates that the battery is in a charging state or an external discharging state, the reset is an abnormal reset; where the external discharging state includes a state in which the battery supplies power to a device outside the vehicle.

In a possible implementation, the processing unit is specifically configured to:
set, based on the variable information, the state of the target function to the target state within a first preset duration; where a value of the first preset duration is between three times and eight times a duration of the scheduling period.

In a possible implementation, the processing unit is specifically configured to:
generate first notification information and second notification information; where a generation time interval between the first notification information and the second notification information is the first preset duration, the first notification information indicates to restore the target function to the target state, and the second notification information indicates to restore function startup condition determination logic of the target function that is used before the reset; and
in response to the first notification information, start to set, based on the variable information, the state of the target function to the target state, and complete restoration of the target state before the function startup condition determination logic is restored in response to the second notification information.

In a possible implementation, the processing unit is specifically configured to:
start, at a first time point, to set the state of the target function to the target state based on the variable information, and complete restoration of the target state before a second time point; where a time interval between the first time point and the second time point is the first preset duration; and
start, at the second time point, to restore function startup condition determination logic of the target function that is used before the reset.

In a possible implementation, the obtaining unit is specifically configured to:
obtain the variable information from a target storage area; where the target storage area belongs to a memory or an external memory of the micro-controller unit.

In a possible implementation, the processing unit is specifically configured to: complete initialization of a target memory of the micro-controller unit in response to the reset instruction; where
when the target storage area belongs to the memory of the micro-controller unit, the target storage area belongs to a memory area other than the target memory.

In a possible implementation, the target storage area is used for periodically writing the state information of the target function; and
before obtaining the variable information in the target storage area, the processing unit is further configured to: pause, based on the reset instruction, a write function of the target storage area.

In a possible implementation, the variable information includes one or more of the following:
a vehicle energy control request, a vehicle high-voltage mode request, a high-voltage enable flag, a high-voltage state of a battery management system, a vehicle high-voltage and low-voltage state, a charge and discharge state, a powertrain readiness state, a vehicle gear, a pedal learning value, a power anti-theft state, a vehicle mode, a driving mode, a single-pedal mode, a scenario mode, a steering mode, and an electronic stability control system mode.

In a possible implementation, the processing unit is specifically configured to: enable the outbound information transmission channel of the micro-controller unit after a second preset duration elapses since disabling the outbound information transmission channel of the micro-controller unit.

According to a third aspect, this application provides a micro-controller unit, where the micro-controller unit includes a processor and a storage. The storage is coupled to the processor. When executing a computer program or computer instructions stored in the storage, the processor may implement the method in any implementation of the first aspect. The micro-controller unit may further include a communication interface, where the communication interface is used for communication between the micro-controller unit and other micro-controller units. By way of example, the communication interface may be a transceiver, a circuit, a bus, a module, or other types of communication interfaces.

In a possible implementation, the micro-controller unit may include:
the storage, configured to store the computer program or the computer instructions; and
the processor, configured to:
   complete software initialization in response to a reset instruction;
   obtain variable information, where the variable information includes state information of a target function before the reset occurs, and the target function includes a function started by the vehicle before the reset occurs; and
   when the variable information indicates that the reset is an abnormal reset, skip startup condition determination logic of the target function, and set, based on the variable information, a state of the target function to a target state, where the target state is a functional state of the target function before the reset occurs.

It should be noted that the computer program or computer instructions in the storage in this application may be pre-stored, or may be downloaded from the Internet and then stored when the micro-controller unit is used. This application does not specifically limit the source of the computer program or computer instructions in the storage. The coupling in this embodiment of this application may be an indirect coupling or a connection between apparatuses, units, or modules in an electrical form, a mechanical form, or another form, and is used for information exchange between the apparatuses, the units, or the modules.

According to a fourth aspect, this application provides a controller, the controller including a system basic chip, a transceiver, and a micro-controller unit; where the micro-controller unit is the micro-controller unit according to any implementation of the second aspect, or the micro-controller unit according to the third aspect; the system basic chip is used to supply power to the micro-controller unit; and the transceiver is used to provide external communication for the micro-controller unit.

According to a fifth aspect, this application provides a vehicle, the vehicle including the micro-controller unit according to any implementation of the second aspect, or including the micro-controller unit according to the third aspect.

According to a sixth aspect, this application provides a computer-readable storage medium, where the computer-readable storage medium stores a computer program or computer instructions, and the computer program or the computer instructions are executed by a processor to implement the method according to any implementation of the first aspect.

According to a seventh aspect, this application provides a computer program product. When the computer program product is executed by a processor, the method described in any implementation of the first aspect is implemented.

The solutions provided in the second aspect to the seventh aspect are used to implement or cooperate to implement the method provided in the first aspect, and therefore, can achieve beneficial effect the same as or corresponding to that in the first aspect. Details are not described herein again.

### BRIEF DESCRIPTION OF DRAWINGS

FIG. 1 is a diagram of a structure of a vehicle controller according to an embodiment of this application;
FIG. 2 is a schematic flowchart of a reset initialization process according to an embodiment of this application;
FIG. 3 is a schematic flowchart of a method according to an embodiment of this application; and
FIG. 4 and FIG. 5 each are a diagram of a structure of a micro-controller unit according to an embodiment of this application.

### DESCRIPTION OF EMBODIMENTS

In embodiments of this application, ''a plurality of'' means two or more than two. In embodiments of this application, "and/or" is used to describe an association relationship between associated objects, and indicates three relationships that may exist independently. For example, A and/or B may indicate the following cases: Only A exists, only B exists, or both A and B exist. A description manner, for example, "at least one (or at least one piece) of a1, a2, ..., and an", used in embodiments of this application includes a case in which any one of a1, a2, ..., and an exists alone, and also includes any combination of any plurality of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

The terms such as "first" and "second" in this application are used to distinguish between same or similar items with basically same roles and functions. It should be understood that there is no logical or timing dependency between "first", "second", and "nth", and neither a quantity nor an execution sequence is limited. It should also be understood that although the following descriptions use terms such as "first" and "second" to describe various elements, these elements should not be limited by the terms. These terms are simply used to distinguish one element from another.

In various embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

During use of a vehicle, a reset of a controller inevitably occurs. The reset may include a soft reset (that is, a software reset) and a hard reset (that is, a hardware reset). The soft reset refers to a reset triggered by a micro-controller unit (micro-controller unit, MCU) chip in the controller. The hard reset refers to a reset triggered by hardware outside the MCU chip or triggered via a power supply, for example, a reset triggered by a system basic chip. The controller reset involved in embodiments of this application includes both an MCU soft reset and an MCU hard reset.

After the controller is reset, conditions of many functions carried by the controller need to be re-evaluated. If startup conditions of the functions are not satisfied, the functions cannot be restored to usage states before the reset, resulting in poor user experience of the functions, and even causing safety risks to occupants under some operating conditions.

For example, in one scenario, when a vehicle is in a charging state, if a controller (for example, an electronic control unit (electronic control unit, ECU)) of the vehicle is reset at this moment, the controller may fail to re-enter the charging state. If a user returns to the vehicle several hours later and finds that the vehicle is still in a low battery state, user experience may be affected.

As another example, in another scenario, a vehicle is generally required to satisfy at least two conditions before entering a drivable state: 1. the gear is in a P gear (parking gear) or N gear (neutral gear); and 2. the vehicle speed is 0. If the vehicle is cruising at a constant speed or accelerating to overtake on a highway and the controller is reset at this moment, since the vehicle does not satisfy the two conditions, the controller may fail to re-enter the driving state. The vehicle may lose power, and the user is required to pull over and re-power the vehicle and shift the gear again, which may cause safety risks.

As another example, in another scenario, if the vehicle is driven in an advanced driving assistance system (advanced driving assistance system, ADAS) driving scenario while turning, and the controller of the vehicle is reset at this moment, the vehicle may lose power, and may also lose a lateral control capability of the ADAS, resulting in safety risks.

It can be understood that the above scenarios are merely examples and do not constitute limitations on embodiments of this application.

In view of the problems of poor user experience or safety risks caused by controller reset in a vehicle, quickly restoring the usage state of functions after a controller reset is a key issue to be solved. Based on this, embodiments of this application provide a resetting restoration method and a related apparatus, which can quickly restore the usage state of functions after a controller reset of a vehicle, reduce safety risks, and improve user driving experience. The following provides example descriptions.

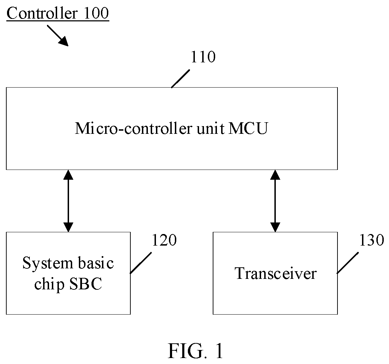

First, FIG. 1 is a diagram of an example of a structure of a vehicle controller 100 according to an embodiment of this application. It can be seen that the controller 100 may include a micro-controller unit (micro-controller unit, MCU) 110, a system basic chip (system basic chip, SBC) 120, and a transceiver 130. The system basic chip 120 and the transceiver 130 are connected to the micro-controller unit 110.

For example, the micro-controller unit 110 integrates a microprocessor, a storage, input/output interfaces, a timer, and a counter. In addition, an operating system (operating system, OS) and one or more application layer software programs are deployed in the micro-controller unit 110. The one or more application layer software programs may be used to implement one or more of the following functions: a vehicle high-voltage management function, a power train (power train, PT) ready arbitration function, a gear arbitration function, a vehicle mode arbitration function, a driving mode arbitration function, a single-pedal mode arbitration function, an accelerator pedal processing function, a power anti-theft function, and a torque filtering function, and the like. It can be understood that the above description regarding functions that may be implemented by the application layer software is merely an example and does not constitute a limitation on embodiments of this application. In a specific implementation, the application layer software deployed in the micro-controller unit 110 may further implement more or fewer functions, and embodiments of this application are not limited thereto.

For example, in specific implementation, the system basic chip 120 may be used to supply power to the micro-controller unit 110 and to perform safety state detection and diagnosis of the micro-controller unit 110.

For example, the transceiver 130 may enable communication between the micro-controller unit 110 and other controllers or components in a vehicle. For example, the transceiver 130 may be, for example, a controller area network (controller area network, CAN) transceiver, a local interconnect network (local interconnect network, LIN) transceiver, or an Ethernet transceiver (for example, a port physical layer (port physical layer, PHY) chip).

For example, the controller 100 may be, for example, a vehicle control unit (vehicle control unit, VCU), a hybrid control unit (hybrid control unit, HCU), a vehicle domain controller (vehicle domain controller, VDC), a vehicle intranet unit (vehicle intranet unit, VIU), or an intelligent driving controller, and the like. Embodiments of this application do not limit the specific type of the controller 100.

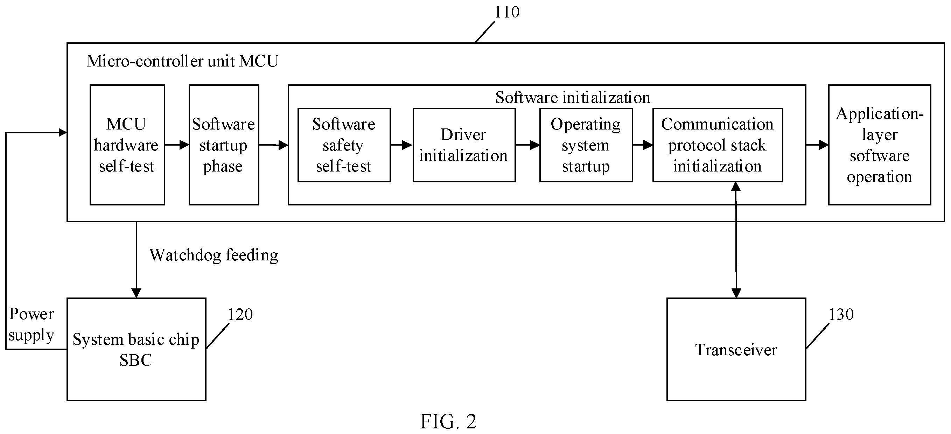

For example, after the micro-controller unit 110 is connected to a power supply from the system basic chip 120, the micro-controller unit 110 first performs a power-on process. For the power-on process, refer to an example in FIG. 2. For example, after the micro-controller unit 110 is connected to the power supply from the system basic chip 120, hardware self-check is first performed on the micro-controller unit 110. The hardware self-check process is fully executed by internal circuits of the micro-controller unit 110.

In a possible implementation, the hardware self-check is not a mandatory process during controller power-on. For example, whether the hardware self-check is performed during the power-on process may be configured according to actual application requirements. This is not limited in embodiments of this application. The description of embodiments of this application is provided with a configuration including hardware self-check as an example.

After the micro-controller unit 110 completes hardware self-check, a software boot (boot) stage is entered. In this stage, the first line of code starts to execute. For example, under normal conditions, application layer software and data are stored in a flash (flash) memory or a read-only memory (read-only memory, ROM). In a possible implementation, during the boot stage, the micro-controller unit 110 may load the application layer software and data into a memory space of the micro-controller unit 110 (for example, into an internal random access memory (random access memory, RAM)) for execution. In another possible implementation, during the boot stage, the micro-controller unit 110 does not need to load the application layer software and data into a memory space of the micro-controller unit 110, and the application layer software and data may be run directly in the flash memory.

After the boot stage is completed, a software initialization stage is entered. For example, the software initialization stage mainly includes steps such as software safety self-check, driver initialization, operating system startup, and communication protocol stack initialization. The software safety self-check may ensure software safety and prevent malicious tampering. The driver initialization may enable external driving functionality. The operating system startup may provide a normal operating environment for the application layer software. The communication protocol stack initialization may prepare communication between the micro-controller unit 110 and the external environment. The communication protocol stack may communicate with the transceiver 130 to enable communication between the micro-controller unit 110 and the external environment. It can be understood that the software initialization procedure shown in FIG. 2 is merely an example, and in a specific implementation, the order of the steps in the software initialization stage is not limited, or the software initialization stage may include more or fewer steps, which may be set according to actual application requirements, and embodiments of this application are not limited thereto.

After the software initialization stage is completed, the operating system starts scheduling application layer software, and the application layer software starts to run normally.

In addition, for example, as shown in FIG. 2, during normal operation of the micro-controller unit 110, a signal is output to a watchdog timer (watchdog timer, WDT) in the system basic chip 120 at regular intervals. This process is referred to as "feeding the watchdog" and is used to detect whether the micro-controller unit 110 is operating normally.

It can be understood that the structure of the controller 100 shown in FIG. 1 and FIG. 2 is merely an example and does not constitute a limitation on embodiments of this application.

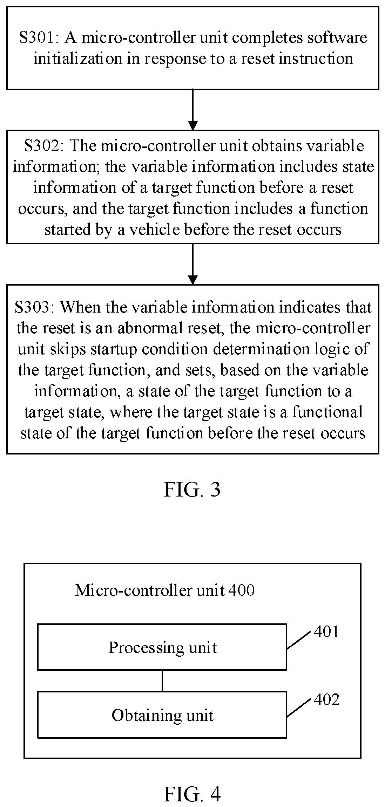

Based on the above description, in order to quickly restore a usage state of a function of a vehicle after a controller of the vehicle is reset, embodiments of this application provide a resetting restoration method. Refer to an example in FIG. 3. The method includes but is not limited to the following steps.

S301: A micro-controller unit completes software initialization in response to a reset instruction.

For example, the micro-controller unit may be the micro-controller unit 110 shown in FIG. 1 or FIG. 2.

In a specific implementation, the micro-controller unit is triggered to reset due to detection of an abnormality. For example, the micro-controller unit is generally subject to corresponding reliability and safety requirements. Therefore, after the software starts running, a system basic chip (for example, the system basic chip 120 shown in FIG. 1 or FIG. 2) and/or a reset trigger detection functional module (which may be a software module or a hardware module) in the micro-controller unit may detect abnormalities of the micro-controller unit in a polling manner. When an abnormality is detected, a reset instruction is sent to the micro-controller unit to trigger a reset of the micro-controller unit. For example, the reset instruction may be, for example, an electrical signal or a variable indicating the micro-controller unit to reset, and embodiments of this application are not limited thereto.

For example, the polling detection may continue until the end of an entire driving cycle (for example, until power-off is completed). Reset is a common restoration measure for a controller, and transient system failures may be repaired through reset so that the controller can continue to operate.

For example, the abnormality may include, for example, a self-check error of the micro-controller unit, a stack overflow error, or a program flow monitoring error, and embodiments of this application are not limited thereto. For ease of understanding, specific vehicle usage scenarios are described below as examples.

For example, in a first scenario, a vehicle is operating normally, a PT Ready state is in a ready-completed state, a gear is in R (reverse gear), N (neutral gear), or D (drive gear), the vehicle is operating in a first driving mode (for example, a sport mode or an economy mode), and a single-pedal mode of the vehicle is in an off state. In this scenario, if the micro-controller unit of the vehicle detects an abnormality, for example a scheduling timeout of a program flow, a reset of the micro-controller unit is triggered to attempt to resolve the abnormality by restarting.

For another example, in a second scenario, the vehicle is in a stationary state, a PT Ready state is in a non-ready-completed state, and the gear is in P. The vehicle is in a charging state, or the vehicle is in an external power supply state (for example, during camping, a high-voltage battery of the vehicle supplies power to an electrical device outside the vehicle). In this scenario, if the micro-controller unit of the vehicle detects an abnormality, for example a self-check error of the micro-controller unit, a reset of the micro-controller unit is triggered to attempt to resolve the abnormality by restarting.

It can be understood that the above scenarios related to occurrence of reset are merely examples and do not constitute limitations on embodiments of this application. In a specific implementation, more other scenarios in which a reset occurs may exist, and embodiments of this application are not limited thereto.

For example, after the micro-controller unit is reset, the micro-controller unit re-enters a boot stage, and then restarts a power-on process from the boot stage. That is, the micro-controller unit re-performs software initialization, which is described in detail with reference to FIG. 2, and is not repeated herein.

S302: The micro-controller unit obtains variable information; the variable information includes state information of a target function before the reset occurs, and the target function includes a function started by the vehicle before the reset occurs.

For example, the target function may include one or more of the following: a high-voltage management function, a powertrain ready-completion arbitration function, a gear function, a vehicle mode function, a single-pedal mode function, an accelerator pedal processing function, a power anti-theft function, and a torque filtering function. It can be understood that the functions described herein are merely examples and do not constitute limitations on embodiments of this application. In a specific implementation, more or fewer functions may be included, and embodiments of this application are not limited thereto.

For example, for ease of subsequent description, a software module used to implement the above target functions is referred to as a target function module. For example, the target function module includes one or more of the following: a high-voltage management module, a powertrain ready-completion arbitration module, a gear arbitration module, a vehicle mode arbitration module, a single-pedal mode arbitration module, an accelerator pedal processing module, a power anti-theft module, and a torque filtering module. It can be understood that the functional modules described herein are merely examples and do not constitute limitations on embodiments of this application. In a specific implementation, more or fewer functional modules may be included, and embodiments of this application are not limited thereto.

For example, the variable information may include one or more of the following: a vehicle energy control request, a vehicle high-voltage mode request, a high-voltage enable flag, a battery management system (battery management system, BMS) high-voltage state, a vehicle high-voltage and low-voltage state, a charge and discharge state, a PT ready state, a vehicle gear, a pedal learning value, a power anti-theft state, a vehicle mode, a driving mode, a single-pedal mode, a scenario mode, a steering mode, and an electronic stability control (electronic stability control, ESC) mode. It can be understood that the variable information described herein is merely an example and does not constitute limitations on embodiments of this application. In a specific implementation, more or fewer items of variable information may be included, and embodiments of this application are not limited thereto.

For example, in specific implementation, the variable information may be obtained after the micro-controller unit completes software initialization. In a possible implementation, the variable information may be obtained from a target storage area of the micro-controller unit. For example, in specific implementation, during normal operation of the vehicle, the state of the target function may be periodically stored in the target storage area. After the micro-controller unit is reset, the variable information obtained from the target storage area may be state information of the target function last stored in the target storage area before the reset occurs.

For example, the target storage area is not affected by software initialization. For example, during the software initialization stage, initialization of a target memory in the micro-controller unit is also performed. That is, data in the target memory is erased. In embodiments of this application, in a possible implementation, the target storage area may be a storage area of a memory of the micro-controller unit. In addition, when memory initialization is configured, an address segment of the target storage area is excluded, that is, the address segment is not included in a target memory address segment for memory initialization. That is, the target storage area does not belong to a region of the target memory. Therefore, data written before the reset can still be retained after reset initialization. In another possible implementation, the target storage area may also be not affected by a hardware reset, that is, data in the target storage area is not erased after the hardware reset. Therefore, a state before reset can be quickly restored based on data in the target storage area.

In another implementation, the target storage area may be a storage area of an external memory of the micro-controller unit. In addition, the external memory may not be erased during software initialization, and thus data written before the reset can still be retained after reset initialization.

For example, the memory of the micro-controller unit or the external memory of the micro-controller unit may be a storage that supports both writing and reading, for example a random access memory (random access memory, RAM) or a flash (flash) memory. Embodiments of this application do not limit the type of the storage.

In a possible implementation, in order to ensure data security in the target storage area, a highest-level security mechanism may be configured for the target storage area. For example, one or more protection mechanisms may be configured, such as an error correcting code (Error Correcting Code, ECC) mechanism, an error-detection and-correction (error-detection and-correction, EDC) mechanism, and an access protection mechanism. This is not limited in embodiments of this application.

In a possible implementation, after the micro-controller unit completes software initialization in response to the reset, an operating system in the micro-controller unit starts scheduling application layer software (including the target function module) for execution. That is, the vehicle starts to operate normally. Since, during normal operation of the vehicle, the state of the target function is periodically stored in the target storage area, new state information will be stored in the target storage area after scheduling of the application layer software is completed. In order to ensure that the variable information obtained from the target storage area is the state information last stored before the reset, the micro-controller unit may read the variable information from the target storage area within a first operating system scheduling period that follows completion of the software initialization. For example, the operating system scheduling period may be, for example, 1 ms to 100 ms, such as 5 ms, 10 ms, or 20 ms, and embodiments of this application do not limit the duration of the scheduling period.

In another possible implementation, since, during normal operation of the vehicle, the state of the target function is periodically stored in the target storage area, after the reset occurs, the micro-controller unit may suspend a write function of the target storage area in response to the reset instruction. After the micro-controller unit completes software initialization, the variable information may be read from the target storage area in time. For example, the micro-controller unit may read the variable information from the target storage area within one to three scheduling periodicities that follow completion of the software initialization. After reading the variable information, the micro-controller unit may enable the write function of the target storage area, so that, during normal operation of the vehicle, the state of the target function continues to be periodically stored in the target storage area for use in a next reset event.

For example, the micro-controller unit may suspend a write function of the target storage area in response to the reset instruction. For example, this may be implemented by sending a notification to application layer software including the target function module to suspend storing state information into the target storage area. Alternatively, the write function of the target storage area may be directly disabled, for example, such that a storage controller of the target storage area no longer writes information into the target storage area. It can be understood that the descriptions herein are merely an example, and do not constitute a limitation on embodiments of this application.

In another possible implementation, after completing software initialization, the micro-controller unit may receive the variable information from a target apparatus. The target apparatus is an apparatus independent of the micro-controller unit and configured to store the variable information. For example, the target apparatus may be a cloud server, or a terminal device capable of communicating with a vehicle (for example, a mobile phone, a tablet, or a wearable device), or another controller in the vehicle, and embodiments of this application are not limited thereto.

For example, in a specific implementation, during normal operation of the vehicle, the state of the target function may be transmitted periodically or upon triggering to the target apparatus for storage. After the micro-controller unit is reset, the micro-controller unit may send a request for obtaining the variable information to the target apparatus. The target apparatus responds to the request by sending the variable information to the micro-controller unit. The variable information sent by the target apparatus to the micro-controller unit may be the state information of the target function that was last stored in the target apparatus before the reset occurs.

S303: When the variable information indicates that the reset is an abnormal reset, the micro-controller unit skips startup condition determination logic of the target function, and sets, based on the variable information, a state of the target function to a target state, where the target state is a functional state of the target function before the reset occurs.

For example, after obtaining the variable information, the micro-controller unit may determine, based on the variable information, whether the reset is an abnormal reset. That is, it is determined whether the reset occurs during a process in which the vehicle is providing the target function. If it is determined that the reset occurs during a process in which the vehicle is providing the target function, then the reset is an abnormal reset. For ease of understanding, the following description is provided with reference to the two scenarios described in S301.

For example, for the first scenario, in a case where the reset occurs in the first scenario, the variable information obtained by the micro-controller unit after software initialization may include PT ready state information. The micro-controller unit may determine whether the reset is an abnormal reset based on the PT ready state information. Specifically, if the PT ready state information indicates that the powertrain system is ready, that is, in a ready state, it indicates that the vehicle is already in a normal operating state before the reset occurs (for example, referring to the vehicle state described in the first scenario above). If a reset occurs at this moment, it can be determined that the reset is an abnormal reset.

Alternatively, for example, for the above first scenario, the variable information obtained by the micro-controller unit after re-performing software initialization may include vehicle gear information. The micro-controller unit may determine whether the reset is an abnormal reset based on the vehicle gear information. For example, if the vehicle gear information indicates that the vehicle is in an R gear, an N gear, or a D gear, it indicates that the vehicle is reversing (corresponding to the R gear), temporarily stopped (corresponding to the N gear), or normally moving forward (corresponding to the D gear) before the reset occurs. If a reset occurs at this moment, it can be determined that the reset is an abnormal reset.

Alternatively, for example, for the above first scenario, the variable information obtained by the micro-controller unit after re-performing software initialization may include vehicle driving mode information. The micro-controller unit may determine whether the reset is an abnormal reset based on the driving mode information. For example, if the driving mode information indicates that the vehicle is in a sport mode or an economy mode, it indicates that the vehicle is operating normally before the reset occurs. If a reset occurs at this moment, it can be determined that the reset is an abnormal reset.

It can be understood that the above description regarding determination of the abnormal reset in the above first scenario is merely an example. In a specific implementation, the abnormal reset may also be determined based on state information such as a vehicle energy control request, a vehicle high-voltage mode request, a high-voltage enable flag, a BMS high-voltage state, a vehicle high-voltage and low-voltage state, a pedal learning value, a power anti-theft state, a vehicle mode, a single-pedal mode, a scenario mode, a steering mode, or an ESC mode, and embodiments of this application do not describe these in detail.

In another possible implementation, in order to more accurately determine whether the reset is an abnormal reset, the micro-controller unit may perform a comprehensive determination based on one or more of the above information. For example, if more than half of the information among the multiple items of information can determine that the reset is abnormal, the reset may be determined as an abnormal reset. Alternatively, for example, the micro-controller unit may perform weighted calculation on determination results of the multiple items of information to finally determine whether the reset is an abnormal reset. It can be understood that the descriptions herein are merely an example, and do not constitute a limitation on embodiments of this application.

For example, for the above second scenario, in a case where the reset occurs in the above second scenario, the variable information obtained by the micro-controller unit after re-performing software initialization may include battery charge and discharge state information of the vehicle. The micro-controller unit may determine whether the reset is an abnormal reset based on the battery charge and discharge state information. Specifically, if the battery charge and discharge state information indicates that a battery is in a charging state or in an external discharge state (for example, the battery supplies power to an electrical device outside the vehicle), it indicates that the vehicle provides a high-voltage management function and/or a vehicle mode arbitration function (arbitrating whether to provide a charging mode or a discharging mode) before the reset occurs. If a reset occurs at this moment, it can be determined that the reset is an abnormal reset.

It can be understood that the above description regarding determination of the abnormal reset is merely an example and does not constitute a limitation on embodiments of this application.

In a specific implementation, after determining that the reset is an abnormal reset, the micro-controller unit may skip startup condition determination logic of the target function, and directly set, based on the above variable information, a state of the target function to a functional state before the reset occurs. For ease of subsequent description, the functional state of the target function before the reset is referred to as a target state.

In a possible implementation, restoration of the state of the target function may be completed within a first preset duration. For example, the first preset duration ranges from three times a scheduling period to eight times the scheduling period. The scheduling period is a scheduling period of an operating system in the above micro-controller unit. For example, assuming that the scheduling period is 10 ms, the micro-controller unit may complete restoration of the state of the target function within 30 ms to 80 ms. For another example, assuming that the scheduling period is 20 ms, the micro-controller unit may complete restoration of the state of the target function within 60 ms to 160 ms. It can be understood that the description of the first preset duration herein is merely an example and does not constitute a limitation on embodiments of this application. For ease of understanding, the following provides an example for description.

In a possible implementation, setting the state of the target function to the target state based on the variable information within the first preset duration may include the following steps: generating first notification information and second notification information, where a generation time interval between the first notification information and the second notification information is the first preset duration, the first notification information indicates to restore the target function to the target state (or may also indicate that a current initialization power-on process is a reset power-on process), and the second notification information indicates to restore startup condition determination logic of the target function that is used before the reset; and in response to the first notification information, starting to set, based on the variable information, the state of the target function to the target state, and completing restoration of the target state before the startup condition determination logic is restored in response to the second notification information.

For example, the above first notification information and the second notification information may be two values of a first target parameter generated by the micro-controller unit. The first target parameter may be a parameter generated by an application layer software module newly deployed in the micro-controller unit in embodiments of this application (referred to as a resetting restoration module). For example, the first target parameter may be specifically represented as a flag bit, and a value of the flag bit is the above first notification information or the second notification information. For example, the first notification information may be 0, and the second notification information may be 1. Alternatively, the first notification information may be 1, and the second notification information may be 0. It can be understood that the description of values of the first notification information and the second notification information herein is merely an example and does not constitute a limitation on embodiments of this application.

For example, in a possible implementation, if the reset occurs during a driving process of the vehicle (for example, referring to the above first scenario), the flag bit may be referred to as a "driving resetting restoration flag bit". Alternatively, for example, in a possible implementation, if the reset occurs during a charging and discharging process of the vehicle (for example, referring to the above second scenario), the flag bit may be referred to as a "charging/discharging resetting restoration flag bit". It can be understood that the description of a name of the flag bit herein is merely an example and does not constitute a limitation on embodiments of this application.

Specifically, after the micro-controller unit determines that the reset is an abnormal reset, the first notification information may first be generated. The following description takes an example in which the first notification information is generated by the resetting restoration module. After generating the first notification information, the resetting restoration module may send the first notification information to the target function module. In addition, after the micro-controller unit determines that the reset is an abnormal reset, the resetting restoration module further sends the obtained variable information to the target function module.

For example, the resetting restoration module may package the obtained variable information into a structure, and send the structure to the target function module through a run-time environment (run-time environment, RTE). The RTE is a specific implementation of a virtual functional bus of an electronic control unit (electronic control unit, ECU), and supports communication among application layer software components, among basic software (including software such as an operating system, a virtualization module, and middleware), and between application layer software components and the basic software. It can be understood that the description herein is merely an example and does not constitute a limitation on embodiments of this application. In a specific implementation, other methods may also be used to send the variable information to the target function module.

After receiving the first notification information and the variable information, the target function module may start, based on an indication of the first notification information, to set, based on the variable information, the state of the target function to the target state. In addition, after generating the first notification information, the resetting restoration module generates the second notification information after the first preset duration, and sends the second notification information to the target function module. Then, the target function module may restore startup condition determination logic of the target function based on an indication of the second notification information. Therefore, the target function module may complete restoration of the target state before the startup condition determination logic is restored in response to the second notification information. For ease of understanding, the following description provides examples with reference to the above first scenario and the above second scenario.

For the reset occurring in the above first scenario, an example may include one or more of the following target function state restoration processes.

For example, it is assumed that the target function module includes a high-voltage management module. After receiving the first notification information and the variable information, the high-voltage management module determines that the first notification information indicates to restore a function to a state before the reset occurs. Based on this, the high-voltage management module skips determination logic of a power-on state machine, that is, skips startup condition determination logic of the high-voltage management function, and forcibly sets the state of the high-voltage management function to a high-voltage management function state indicated by a high-voltage enable flag in the variable information. Then, after receiving the above second notification information, the high-voltage management module restores determination logic of a power-on state machine of the high-voltage management module, that is, performs real-time determination according to a vehicle high-voltage state.

For example, assuming that the target function module includes a PT Ready arbitration module. After receiving the above first notification information and the variable information, the PT Ready arbitration module determines that the first notification information indicates to restore a function to a state before the reset occurs. Based on this, assuming that a PT ready state in the variable information indicates a ready state, the PT Ready arbitration module skips startup condition determination logic of the ready state, and forcibly sets the PT ready state to the ready state. Then, after receiving the above second notification information, the PT Ready arbitration module restores logic for real-time determination of the ready state.

For example, assuming that the target function module includes a gear arbitration module. After receiving the above first notification information and the variable information, the gear arbitration module determines that the first notification information indicates to restore a function to a state before the reset occurs. Based on this, the gear arbitration module skips determination logic of a gear determination state machine, that is, skips startup condition determination logic of the gear, and forcibly sets a state of the gear to an actual gear indicated by vehicle gear information in the variable information. Then, after receiving the above second notification information, the gear arbitration module restores logic for real-time determination of the gear.

For example, assuming that the target function module includes a vehicle mode arbitration module (or a single-pedal mode arbitration module). After receiving the above first notification information and the variable information, the vehicle mode arbitration module (or the single-pedal mode arbitration module) determines that the first notification information indicates to restore a function to a state before the reset occurs. Based on this, the vehicle mode arbitration module (or the single-pedal mode arbitration module) skips startup condition determination logic of a mode, and forcibly sets a state of the vehicle mode (or the single-pedal mode) to an actual mode indicated by vehicle mode information (or single-pedal mode information) in the variable information. Then, after receiving the above second notification information, the vehicle mode arbitration module (or the single-pedal mode arbitration module) restores logic for real-time determination of each mode.

For example, assuming that the target function module includes an accelerator pedal processing module. After receiving the above first notification information and the variable information, the accelerator pedal processing module determines that the first notification information indicates to restore a function to a state before the reset occurs. Based on this, the accelerator pedal processing module skips an accelerator pedal learning process, that is, skips startup condition determination logic of an accelerator pedal state, and forcibly sets a learning value of the accelerator pedal to a learning value indicated by a pedal learning value in the variable information. Then, after receiving the above second notification information, the accelerator pedal processing module restores logic for real-time determination of a vehicle accelerator pedal learning value.

For example, assuming that the target function module includes a power anti-theft module. After receiving the above first notification information and the variable information, the power anti-theft module determines that the first notification information indicates to restore a function to a state before the reset occurs. Based on this, the power anti-theft module skips determination logic of an anti-theft authentication state machine, that is, skips startup condition determination logic of the power anti-theft function, and forcibly sets a state of the power anti-theft to a state indicated by a power anti-theft state in the variable information. Then, after receiving the above second notification information, the power anti-theft module restores logic for real-time determination of an anti-theft state.

For the reset occurring in the above second scenario, an example may include one or more of the following target function state restoration processes.

For example, assuming that the target function module includes a high-voltage management module. After receiving the first notification information and the variable information, the high-voltage management module determines that the first notification information indicates to restore a function to a state before the reset occurs. Based on this, the high-voltage management module skips determination logic of a power-on state machine, that is, skips startup condition determination logic of the high-voltage management function, and forcibly sets the state of the high-voltage management function to a high-voltage management function state indicated by a high-voltage enable flag in the variable information. Then, after receiving the above second notification information, the high-voltage management module restores determination logic of a power-on state machine of the high-voltage management module, that is, performs real-time determination according to a vehicle high-voltage state.

For example, assuming that the target function module includes a vehicle mode arbitration module. After receiving the above first notification information and the variable information, the vehicle mode arbitration module determines that the first notification information indicates to restore a function to a state before the reset occurs. Based on this, the vehicle mode arbitration module skips startup condition determination logic of a mode, and forcibly sets a state of the vehicle mode to a state indicated by a charging and discharging state in the variable information. Then, after receiving the above second notification information, the vehicle mode arbitration module restores logic for real-time determination of a vehicle charging and discharging mode.

It may be understood that the foregoing descriptions are merely examples, and do not constitute a limitation on embodiments of this application. In a specific implementation, other function modules may also respond to the above first notification information and the second notification information to perform corresponding operations, which are not described one by one herein.

In a possible implementation, within the above first preset duration, the resetting restoration module may periodically send the first notification information to the target function module. In this case, the first notification information that triggers the target function module to start setting, based on the above variable information, the state of the target function to the above target state may be notification information sent by the resetting restoration module to the target function module for the first time.

In the above example, the resetting restoration module uniformly packages the obtained variable information and then sends the packaged variable information to each function module. In another implementation, the resetting restoration module may send variable information required by each function module to a corresponding function module. For example, taking the above PT Ready arbitration module as an example, the resetting restoration module may send variable information required by the PT Ready arbitration module (for example, a PT ready state) to the PT Ready arbitration module. Other variable information may not be sent, thereby saving transmission bandwidth.

It can be understood that the resetting restoration module and the target function module are software modules running on the micro-controller unit, and therefore operations performed by these modules are operations performed by the micro-controller unit.

In another possible implementation, setting the state of the target function to the target state based on the variable information within the first preset duration may include the following steps: starting, at a first time point, to set the state of the target function to the target state based on the variable information, and completing restoration of the target state before a second time point, where the first time point and the second time point are separated by the first preset duration; and starting, at the second time point, to restore startup condition determination logic of the target function that is used before the reset.

For example, after the micro-controller unit determines that the reset is an abnormal reset, the resetting restoration module may send the obtained variable information to the target function module. For details of sending, reference may be made to the foregoing description, and details are not described herein again. After receiving the variable information, the target function module may start, at a first time point, to set, based on the variable information, the state of the target function to the above target state. For a specific implementation of restoration, reference may be made to the foregoing description, and details are not described herein again. Then, restoration of the target state is completed within the first preset duration starting from the first time point. Restoration of startup condition determination logic of the target function that is used before the reset is started at a second time point. For example, a timer may be started from the first time point, and a duration of the timer is the first preset duration, and when the timer expires, restoration of the startup condition determination logic of the target function that is used before the reset may be started. For a specific implementation of restoring the condition determination logic, reference may be made to the above description, and details are not described herein again.

Alternatively, for example, the resetting restoration module may start timing when sending the variable information to the target function module. For example, timing may be performed by using a timer. After the first preset duration elapses, the resetting restoration module sends third notification information to the target function module. The third notification information may be the same as the above second notification information and indicates the target function module to restore the startup condition determination logic of the target function that is used before the reset. For details, reference may be made to the relevant description of the second notification information, and details are not described herein again.

It can be understood that the above description of the specific implementation of setting the state of the target function to the target state based on the variable information within the first preset duration is merely an example and does not constitute a limitation on embodiments of this application.

In a possible implementation, assuming that the micro-controller unit is an MCU in a controller that responds to a vehicle torque demand, for example, an MCU in a VCU, an HCU, a VIU, or a VDC. Then, if the above reset occurs during normal driving of the vehicle (for example, the reset occurs in the above scenario one), in order to quickly transition torque before the reset to a latest target torque of the vehicle, torque filtering may be performed after restoration of the above target state is completed.

For example, in a specific implementation, when a micro-controller unit reset occurs during driving of the vehicle, the micro-controller unit cannot respond to a vehicle torque demand during the reset, and therefore torque of the vehicle decreases. In order to quickly transition to the latest target torque of the vehicle, torque filtering may be performed by taking the latest target torque as a target. The latest target torque is obtained by the micro-controller unit based on a latest actual accelerator pedal position of the vehicle and a latest actual vehicle speed.

For example, an open-loop torque filtering manner or a closed-loop torque filtering manner may be used. If an open-loop torque filtering mode is used, the micro-controller unit may perform filtering starting from 0. That is, a filtering process takes 0 as an initial torque value for filtering and takes the above latest target torque as a target value for filtering. If the closed-loop torque filtering manner is used, the micro-controller unit may obtain a current actual torque of the vehicle from a motor, and take the actual torque as an initial torque value for filtering and take the above latest target torque as a target value for filtering.

For example, the torque filtering operation may be implemented by a torque filtering module in the micro-controller unit. The torque filtering module may receive notification information after restoration of the above target state is completed (for example, receiving the above second notification information or the above third notification information). Then, the torque filtering module performs the above filtering operation in response to the notification information. By performing torque filtering after restoration of the target state to implement rapid transition of torque before the reset to the latest target torque, vehicle oscillation is reduced, and user experience is improved.

In a possible implementation, during the reset process, the micro-controller unit cannot correctly respond to external demands, and therefore, for the vehicle, the controller is essentially in a node loss state. In order to prevent the micro-controller unit from affecting normal implementation of functions of surrounding controllers during the reset process, the micro-controller unit may temporarily disable an outbound information transmission channel. After restoration of the above target state is completed, the micro-controller unit re-enables the outbound information transmission channel.

For example, in a specific implementation, the outbound information transmission channel of the micro-controller unit is constructed by a communication protocol stack in the micro-control unit. Therefore, after the micro-controller unit determines that the reset is an abnormal reset, the resetting restoration module may further send notification information to the communication protocol stack. The notification information may be, for example, the above first notification information or other notification information different from the first notification information, and this application is not limited thereto. The communication protocol stack may disable the outbound information transmission channel in response to the notification information. For example, referring to FIG. 1 or FIG. 2, after the outbound information transmission channel is disabled, the communication protocol stack does not send information to the transceiver 130, but may receive information from the transceiver 130. For example, torque information from the motor described above may be received. Then, after restoration of the above target state is completed, for example, after the resetting restoration module sends notification information to the communication protocol stack and the above first preset duration elapses, the resetting restoration module may send another piece of notification information to the communication protocol stack. The another piece of notification information may be, for example, the above second notification information, the above third notification information, or other notification information, and this application is not limited thereto. The communication protocol stack may enable the outbound information transmission channel in response to the another piece of notification information. For example, referring to FIG. 1 or FIG. 2, after the outbound information transmission channel is enabled, the communication protocol stack may send information to the transceiver 130.

In a possible implementation, in order to avoid that the outbound information transmission channel remains disabled for a long time and causes the micro-controller unit to still be unable to normally respond to external demands after restoration of the above target state, a timeout protection mechanism may be set for disabling the outbound information transmission channel. For example, after the communication protocol stack disables the outbound information transmission channel, if no notification information for enabling the outbound information transmission channel is received after a second preset duration elapses, the communication protocol stack does not continue waiting for the notification information and directly enables the outbound information transmission channel. For example, the second preset duration ranges from 200 ms to 300 ms.

In summary, in embodiments of this application, an abnormal reset may be determined based on the variable information itself, and a function state before the reset is restored based on the variable information. Compared with the related art, this solution does not need to re-determine startup conditions of a vehicle function state, and does not need to compare a current vehicle state with a state before the reset, thereby greatly reducing processing time and enabling rapid restoration of a function use state after a controller of the vehicle is reset.

The resetting restoration method provided in embodiments of this application is mainly described above. It may be understood that, to implement the corresponding functions, the control units or devices include corresponding hardware structures and/or software modules for executing the functions. In combination with example units and steps described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

In a case where function modules are divided according to corresponding functions, embodiments of this application further provide an apparatus for implementing any one of the above methods. For example, the provided apparatus includes units (or means) for implementing steps in any one of the above methods.

For example, FIG. 4 is a diagram of a structure of a micro-controller unit 400 according to an embodiment of this application. The micro-controller unit 400 shown in FIG. 4 may be a micro-controller unit for implementing any embodiment of the above resetting restoration method. The micro-controller unit 400 may include a processing unit 401 and an obtaining unit 402. Specifically:
the processing unit 401 is configured to complete software initialization in response to a reset instruction;
the obtaining unit 402 is configured to obtain variable information, where the variable information includes state information of a target function before the reset occurs, and the target function includes a function started by the vehicle before the reset occurs; and
the processing unit 401 is further configured to: when the variable information indicates that the reset is an abnormal reset, skip startup condition determination logic of the target function, and set a state of the target function to a target state based on the variable information, where the target state is a function state of the target function before the reset occurs.

In a possible implementation, the obtaining unit 402 is specifically configured to:
obtain the variable information within a first operating system scheduling period that follows completion of the software initialization.

In a possible implementation, the processing unit 401 is further configured to:
when the variable information indicates that the reset is an abnormal reset, disable an outbound information transmission channel of the micro-controller unit; and
after setting the state of the target function to the target state based on the variable information, enable the outbound information transmission channel of the micro-controller unit.

In a possible implementation, the variable information includes powertrain ready state information of the vehicle; the variable information indicating that the reset is an abnormal reset includes:
when the powertrain ready state information indicates that a powertrain is ready, the reset is an abnormal reset.

In a possible implementation, the processing unit 401 is further configured to:
after setting the state of the target function to the target state based on the variable information, obtain latest torque information of the vehicle; and
perform torque filtering based on the latest torque information.

In a possible implementation, the variable information includes battery charging and discharging state information of the vehicle; the variable information indicating that the reset is an abnormal reset includes:
when the battery charging and discharging state information indicates that the battery is in a charging state or an external discharging state, the reset is an abnormal reset; the external discharging state includes that the battery supplies power to a device outside the vehicle.

In a possible implementation, the processing unit 401 is specifically configured to:
set the state of the target function to the target state based on the variable information within a first preset duration; the first preset duration ranges from three times to eight times a duration of the scheduling period.

In a possible implementation, the processing unit 401 is specifically configured to:
generate first notification information and second notification information, where a generation time interval between the first notification information and the second notification information is the first preset duration, the first notification information indicates to restore the target function to the target state, and the second notification information indicates to restore function startup condition determination logic of the target function that is used before the reset; and
in response to the first notification information, start to set, based on the variable information, the state of the target function to the target state, and complete restoration of the target state before the function startup condition determination logic is restored in response to the second notification information.

In a possible implementation, the processing unit 401 is specifically configured to:
start, at a first time point, to set the state of the target function to the target state based on the variable information, and complete restoration of the target state before a second time point, where a time interval between the first time point and the second time point is the first preset duration; and
start, at the second time point, to restore function startup condition determination logic of the target function that is used before the reset.

In a possible implementation, the obtaining unit 402 is specifically configured to:
obtain the variable information from a target storage area; where the target storage area belongs to a memory or an external memory of the micro-controller unit.

In a possible implementation, the processing unit 401 is specifically configured to: complete initialization of a target memory of the micro-controller unit in response to the reset instruction; where
when the target storage area belongs to the memory of the micro-controller unit, the target storage area belongs to a memory area other than the target memory.

In a possible implementation, the target storage area is used for periodically writing the state information of the target function; and
before obtaining the variable information in the target storage area, the processing unit 401 is further configured to: pause, based on the reset instruction, a write function of the target storage area.

In a possible implementation, the variable information includes one or more of the following:
a vehicle energy control request, a vehicle high-voltage mode request, a high-voltage enable flag, a high-voltage state of a battery management system, a vehicle high-voltage and low-voltage state, a charge and discharge state, a powertrain readiness state, a vehicle gear, a pedal learning value, a power anti-theft state, a vehicle mode, a driving mode, a single-pedal mode, a scenario mode, a steering mode, and an electronic stability control system mode.

In a possible implementation, the processing unit 401 is specifically configured to: enable the outbound information transmission channel of the micro-controller unit after a second preset duration elapses since disabling the outbound information transmission channel of the micro-controller unit.

Operations of respective units in the micro-controller unit 400 shown in FIG. 4 and beneficial effects thereof may refer to corresponding descriptions in FIG. 2 and the possible implementations described above, and details are not described herein again.

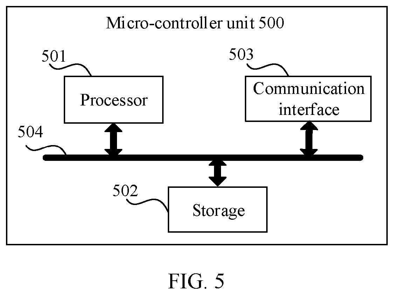

FIG. 5 shows a diagram of a possible hardware structure of a micro-controller unit according to this application, and the micro-controller unit may be the micro-controller unit in the method described in the above implementations. The micro-controller unit 500 includes: a processor 501, a storage 502, and a communication interface 503. The processor 501, the communication interface 503, and the storage 502 may be connected to each other or connected to each other through a bus 504.

For example, the storage 502 is used to store computer programs and data of the micro-controller unit 500, and the storage 502 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

Software or program code required for implementing all or part of functions of units in the foregoing method implementations is stored in the storage 502.

In a possible implementation, if software or program code required for a part of the functions of the units is stored in the storage 502, the processor 501, in addition to invoking the program code in the storage 502 to implement a part of the functions, may cooperate with another component (for example, the communication interface 503) to jointly complete another function (for example, a data receiving or sending function) described in the method embodiments.

The number of communication interfaces 503 may be plural, and the communication interfaces 503 are used to support communication of the micro-controller unit 500, for example, receiving or transmitting data or signals.

For example, the processor 501 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of the digital signal processor and a microprocessor. The processor 501 may be configured to read programs stored in the storage 502 and execute operations performed by the micro-controller in the method described in FIG. 2 and the possible implementations thereof.

Operations of respective units in the micro-controller unit 500 shown in FIG. 5 and beneficial effects thereof may refer to corresponding descriptions in the foregoing method implementations, and details are not described herein again.

This application further provides a vehicle, and the vehicle includes the micro-controller unit according to any of the above implementations or includes the controller 100 shown in FIG. 1.

This application further provides a computer-readable storage medium, where a computer program is stored, and the computer program, when executed by a processor, is configured to implement operations performed by the micro-controller unit in any one of the above implementations and possible implementations thereof.

This application further provides a computer program product, and when the computer program product is read and executed by a computer, the operations performed by the micro-controller unit in any one of the above implementations and possible implementations thereof are executed.

It should be understood that, in embodiments of this application, sequence numbers of processes do not mean an execution sequence. The execution sequence of the processes should be determined based on functions and internal logic of the processes, and shall not constitute any limitation on implementation processes of embodiments of this application.

It should be further understood that the term "include" (also referred to as "includes", "including", "comprises", and/or "comprising"), when being used in this specification, specifies presence of the stated features, integers, steps, operations, elements, and/or components, with presence or addition of one or more other features, integers, steps, operations, elements, components, and/or their combinations not excluded.

It should be further understood that "an embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments by using any appropriate manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A resetting restoration method, wherein the method is applied to a micro-controller unit of a vehicle, and the method comprises:
completing software initialization in response to a reset instruction;
obtaining variable information, wherein the variable information comprises state information of a target function before the reset occurs, and the target function comprises a function started by the vehicle before the reset occurs; and
when the variable information indicates that the reset is an abnormal reset, skipping startup condition determination logic of the target function, and setting, based on the variable information, a state of the target function to a target state, wherein the target state is a functional state of the target function before the reset occurs.

2. The method according to claim 1, wherein the obtaining the variable information comprises:
obtaining the variable information within a first operating system scheduling period that follows completion of the software initialization.

3. The method according to claim 1 or 2, wherein when the variable information indicates that the reset is an abnormal reset, the method further comprises: disabling an outbound information transmission channel of the micro-controller unit; and
after the setting, based on the variable information, the state of the target function to the target state, the method further comprises: enabling the outbound information transmission channel of the micro-controller unit.

4. The method according to any one of claims 1 to 3, wherein the variable information comprises readiness state information of a powertrain of the vehicle; and the variable information indicating that the reset is an abnormal reset comprises:
when the readiness state information of the powertrain indicates that the powertrain is ready, the reset is an abnormal reset.

5. The method according to claim 4, wherein after the setting, based on the variable information, the state of the target function to the target state, the method further comprises:
obtaining latest torque information of the vehicle; and
performing torque filtering based on the latest torque information.

6. The method according to any one of claims 1 to 5, wherein the variable information comprises charge and discharge state information of a battery of the vehicle; and the variable information indicating that the reset is an abnormal reset comprises:
when the charge and discharge state information of the battery indicates that the battery is in a charging state or an external discharging state, the reset is an abnormal reset, wherein the external discharging state comprises a state in which the battery supplies power to a device outside the vehicle.

7. The method according to any one of claims 1 to 6, wherein the setting, based on the variable information, the state of the target function to the target state comprises:
setting, based on the variable information, the state of the target function to the target state within a first preset duration, wherein a value of the first preset duration is between three times and eight times a duration of the scheduling period.

8. The method according to claim 7, wherein the setting, based on the variable information, the state of the target function to the target state within the first preset duration comprises:
generating first notification information and second notification information, wherein a generation time interval between the first notification information and the second notification information is the first preset duration, the first notification information indicates to restore the target function to the target state, and the second notification information indicates to restore function startup condition determination logic of the target function that is used before the reset; and
in response to the first notification information, starting to set, based on the variable information, the state of the target function to the target state, and completing restoration of the target state before the function startup condition determination logic is restored in response to the second notification information.

9. The method according to claim 7, wherein the setting, based on the variable information, the state of the target function to the target state within the first preset duration comprises:
starting, at a first time point, to set the state of the target function to the target state based on the variable information, and completing restoration of the target state before a second time point, wherein a time interval between the first time point and the second time point is the first preset duration; and
starting, at the second time point, to restore function startup condition determination logic of the target function that is used before the reset.

10. The method according to any one of claims 1 to 9, wherein the obtaining the variable information comprises:
obtaining the variable information from a target storage area, wherein the target storage area belongs to a memory or an external memory of the micro-controller unit.

11. The method according to claim 10, wherein the completing the software initialization in response to the reset instruction comprises: completing initialization of a target memory of the micro-controller unit in response to the reset instruction; wherein
when the target storage area belongs to the memory of the micro-controller unit, the target storage area belongs to a memory area other than the target memory.

12. The method according to claim 10 or 11, wherein the target storage area is used for periodically writing the state information of the target function; and before the obtaining the variable information in the target storage area, the method further comprises: pausing, based on the reset instruction, a write function of the target storage area.

13. The method according to any one of claims 1 to 10, wherein the obtaining the variable information comprises:
receiving the variable information from a target apparatus, wherein the target apparatus is independent of the micro-controller unit and is configured to store the variable information.

14. The method according to any one of claims 1 to 13, wherein the variable information comprises one or more of the following:
a vehicle energy control request, a vehicle high-voltage mode request, a high-voltage enable flag, a high-voltage state of a battery management system, a vehicle high-voltage and low-voltage state, a charge and discharge state, a powertrain readiness state, a vehicle gear, a pedal learning value, a power anti-theft state, a vehicle mode, a driving mode, a single-pedal mode, a scenario mode, a steering mode, and an electronic stability control system mode.

15. The method according to claim 3, wherein the enabling the outbound information transmission channel of the micro-controller unit comprises:
enabling the outbound information transmission channel of the micro-controller unit after a second preset duration elapses since disabling the outbound information transmission channel of the micro-controller unit.

16. A micro-controller unit, wherein the micro-controller unit comprises:
a processing unit, configured to complete software initialization in response to a reset instruction; and
an obtaining unit, configured to obtain variable information, wherein the variable information comprises state information of a target function before the reset occurs, and the target function comprises a function started by the vehicle before the reset occurs;
wherein the processing unit is further configured to: when the variable information indicates that the reset is an abnormal reset, skip startup condition determination logic of the target function, and set, based on the variable information, a state of the target function to a target state, wherein the target state is a functional state of the target function before the reset occurs.

17. The micro-controller unit according to claim 16, wherein the obtaining unit is specifically configured to:
obtain the variable information within a first operating system scheduling period that follows completion of the software initialization.

18. The micro-controller unit according to claim 16 or 17, wherein the processing unit is further configured to:
when the variable information indicates that the reset is an abnormal reset, disable an outbound information transmission channel of the micro-controller unit; and
after setting, based on the variable information, the state of the target function to the target state, enable the outbound information transmission channel of the micro-controller unit.

19. The micro-controller unit according to any one of claims 16 to 18, wherein the variable information comprises readiness state information of a powertrain of the vehicle; and the variable information indicating that the reset is an abnormal reset comprises:
when the readiness state information of the powertrain indicates that the powertrain is ready, the reset is an abnormal reset.

20. The micro-controller unit according to claim 19, wherein the processing unit is further configured to:
after setting, based on the variable information, the state of the target function to the target state, obtain latest torque information of the vehicle; and
perform torque filtering based on the latest torque information.

21. The micro-controller unit according to any one of claims 16 to 20, wherein the variable information comprises charge and discharge state information of a battery of the vehicle; and the variable information indicating that the reset is an abnormal reset comprises:
when the charge and discharge state information of the battery indicates that the battery is in a charging state or an external discharging state, the reset is an abnormal reset, wherein the external discharging state comprises a state in which the battery supplies power to a device outside the vehicle.

22. The micro-controller unit according to any one of claims 16 to 21, wherein the processing unit is specifically configured to:
set, based on the variable information, the state of the target function to the target state within a first preset duration, wherein a value of the first preset duration is between three times and eight times a duration of the scheduling period.

23. The micro-controller unit according to claim 22, wherein the processing unit is specifically configured to:
generate first notification information and second notification information, wherein a generation time interval between the first notification information and the second notification information is the first preset duration, the first notification information indicates to restore the target function to the target state, and the second notification information indicates to restore function startup condition determination logic of the target function that is used before the reset; and
in response to the first notification information, start to set, based on the variable information, the state of the target function to the target state, and complete restoration of the target state before the function startup condition determination logic is restored in response to the second notification information.

24. The micro-controller unit according to claim 22, wherein the processing unit is specifically configured to:
start, at a first time point, to set the state of the target function to the target state based on the variable information, and complete restoration of the target state before a second time point; wherein a time interval between the first time point and the second time point is the first preset duration; and
start, at the second time point, to restore function startup condition determination logic of the target function that is used before the reset.

25. The micro-controller unit according to any one of claims 16 to 24, wherein the obtaining unit is specifically configured to:
obtain the variable information from a target storage area, wherein the target storage area belongs to a memory or an external memory of the micro-controller unit.

26. The micro-controller unit according to claim 25, wherein the processing unit is specifically configured to: complete initialization of a target memory of the micro-controller unit in response to the reset instruction; wherein
when the target storage area belongs to the memory of the micro-controller unit, the target storage area belongs to a memory area other than the target memory.

27. The micro-controller unit according to claim 25 or 26, wherein the target storage area is used for periodically writing the state information of the target function; and
before obtaining the variable information in the target storage area, the processing unit is further configured to: pause, based on the reset instruction, a write function of the target storage area.

28. The micro-controller unit according to any one of claims 16 to 27, wherein the variable information comprises one or more of the following:
a vehicle energy control request, a vehicle high-voltage mode request, a high-voltage enable flag, a high-voltage state of a battery management system, a vehicle high-voltage and low-voltage state, a charge and discharge state, a powertrain readiness state, a vehicle gear, a pedal learning value, a power anti-theft state, a vehicle mode, a driving mode, a single-pedal mode, a scenario mode, a steering mode, and an electronic stability control system mode.

29. The micro-controller unit according to claim 18, wherein the processing unit is specifically configured to: enable the outbound information transmission channel of the micro-controller unit after a second preset duration elapses since disabling the outbound information transmission channel of the micro-controller unit.

30. A micro-controller unit, wherein the micro-controller unit comprises a processor and a storage, wherein the storage is configured to store a computer program or computer instructions, and the processor is configured to execute the computer program or the computer instructions stored in the storage, to enable the micro-controller unit to perform the method according to any one of claims 1 to 15.

31. A controller, wherein the controller comprises a system basic chip, a transceiver, and a micro-controller unit; wherein the micro-controller unit is the micro-controller unit according to any one of claims 16 to 29 or the micro-controller unit according to claim 30; the system basic chip is configured to supply power to the micro-controller unit; and the transceiver is configured to provide external communication for the micro-controller unit.

32. A computer-readable storage medium, wherein the computer-readable storage medium stores a computer program or computer instructions, and the computer program or the computer instructions are executed by a processor to implement the method according to any one of claims 1 to 15.
